# EUROPEAN PATENT APPLICATION

(11) **EP 3 450 944 A1**
(43) Date of publication of application: **06.03.2019**
(21) Application number: 18190388.1
(22) Date of filing: 23.08.2018
(51) Int. Cl.: G01J 5/08, G01J 5/02, G01J 5/04, G01J 5/06, G01J 5/34, G01J 5/00, G08B 13/196

(54) **LIGHT SHIELDING PLATE ATTACHMENT STRUCTURE, INFRARED DETECTOR, AND LIGHT SHIELDING PLATE**

(30) Priority: 31.08.2017 JP 2017168045
(71) Applicant: Panasonic Intellectual Property Management Co., Ltd., Osaka-shi, Osaka 540-6207 (JP)
(72) Inventor: TOYODA, Ichiro, Osaka-shi, Osaka 540-6207 (JP)
(74) Representative: Müller-Boré & Partner Patentanwälte PartG mbB

(57) **Abstract**

An object would be to propose a light shielding plate attachment structure, an infrared detector, and a light shielding plate which can allow more precise setting of a detection area. The light shielding plate attachment structure includes: a decorative cover (8); and a light shielding plate (9) for shielding infrared light. The decorative cover (8) is to be attached to a housing body (5). The housing body (5) accommodates an infrared sensor (2) and supports an infrared transmitting member (3) in front of the infrared sensor (2). The decorative cover (8) includes a window hole (83) for exposing the infrared transmitting member (3). The light shielding plate (9) includes first part (94) in contact with a surface (811) of the decorative cover (8) opposite from the housing body (5) and second part (92; 92a; 92b; 92c) in contact with a surface (812) of the decorative cover (8) facing the housing body (5).

## Description

### Technical Field

The present invention generally relates to light shielding plate attachment structures, infrared detectors, and light shielding plates, and particularly relates to a light shielding plate attachment structure, an infrared detector including the light shielding plate attachment structure, and a light shielding plate used therein.

### Background Art

In the past, a heat ray sensing automatic switch has been known as one type of infrared detecting devices (Document 1 [JP H06-243356 A]). The heat ray sensing automatic switch disclosed in Document 1 includes a heat ray sensor including pyroelectric devices for detecting heat rays from human bodies or the like, a controller, and a case accommodating the heat ray sensor and the controller.

In the heat ray sensing automatic switch, the case has, at its lower end, a flange with a substantially disk shape. The flange is provided at its center with a circular exposing window which exposes a light receiving lens with a hemispherical shape. The light receiving lens is placed in front of a light receiving surface of the heat ray sensor accommodated in the case, and includes a Fresnel lens enabling convergence of heat rays (infrared rays) entering the light receiving lens from the outside of the case on the heat ray sensor. Further, the heat ray sensing automatic switch includes a decorative plate (decorative cover) attached to the flange so that it covers a lower surface of the flange.

The heat ray sensing automatic switch is provided with a region limiting attachment (light shielding plate) covering a front surface of the light receiving lens. The region limiting attachment has a hemispherical shape extending along the front surface of the light receiving lens and is made of synthetic resin material capable of shielding heat rays. Additionally, the region limiting attachment includes an opening window for limiting an incident region where heat rays strike the light receiving lens, to a partial region of the light receiving lens. Further, two latching claws protrude from an upper edge of the region limiting attachment. Each latching claw has a shape capable of being engaged into a latching recess formed in a region of the flange which corresponds to a vicinity of the light receiving lens.

In the heat ray sensing automatic switch, the region limiting attachment is detachably attached to the case by engaging the latching claws into the latching recesses. Therefore, there may be a probability that a positional relationship between the decorative plate and the region limiting attachment may change. Change in the positional relationship between the decorative plate and the region limiting attachment may cause a decrease in precision of setting the detection area.

In the fields of infrared detectors, there may be needs to set the detection area more precisely.

An object of the present invention would be to propose a light shielding plate attachment structure, an infrared detector, and a light shielding plate which can allow more precise setting of a detection area.

### Summary of Invention

A light shielding plate attaching structure of one aspect according to the present invention includes a decorative cover, and a light shielding plate for shielding infrared light. The decorative cover is to be attached to a housing body. The housing body accommodates an infrared sensor and supports an infrared transmitting member in front of the infrared sensor. The decorative cover includes a window hole for exposing the infrared transmitting member. The light shielding plate includes first part in contact with a surface of the decorative cover opposite from the housing body and second part in contact with a surface of the decorative cover facing the housing body.

An infrared detector of one aspect according to the present invention includes the light shielding plate attaching structure.

A light shielding plate of one aspect according to the present invention is used in the light shielding plate attaching structure.

### Brief Description of Drawings

FIG. 1 is a perspective view of an infrared detector of one embodiment according to the present invention.
FIG. 2 is a front view of the infrared detector of the above.
FIG. 3 is an exploded perspective view of the infrared detector of the above.
FIG. 4 relates to the infrared detector of the above, and is an exploded perspective view thereof wherein a decorative cover, a terminal cover, screws, clamping metal parts, and others are detached.
FIG. 5 relates to the infrared detector of the above, and is a section taken along line A-A of FIG. 2.
FIG. 6 relates to the infrared detector of the above, and is a section taken along line B-B of FIG. 2.
FIG. 7 relates to the infrared detector of the above, and is a perspective view thereof wherein infrared transmitting members, the decorative cover, a light shielding plate, and others are detached.
FIG. 8 relates to the infrared detector of the above, and is a perspective view thereof wherein the infrared transmitting members and the light shielding plate are detached.
FIG. 9A and 9B are explanatory views for how to assemble the infrared detector of the above.
FIG. 10 is an explanatory view of the detection area of the infrared detector of the above.
FIG. 11A is a plan view of the light shielding plate used in the infrared detector of the above.
FIG. 11B is a front view of the light shielding plate used in the infrared detector of the above.
FIG. 11C is a bottom view of the light shielding plate used in the infrared detector of the above.
FIG. 12 is a front view of an infrared detector according to variation 1 of one embodiment in accordance with the present invention.
FIG. 13A is a front view of an infrared detector according to variation 2 of one embodiment in accordance with the present invention.
FIG. 13B is a right side view of two light shielding plates of the infrared detector of the above to illustrate a relative positional relationship therebetween.
FIG. 14 is a front view of an infrared detector according to variation 3 of one embodiment in accordance with the present invention.
FIG. 15 is a front view of an infrared detector according to variation 4 of one embodiment in accordance with the present invention.

### Description of Embodiments

### (EMBODIMENTS)

### (1) ENTIRE STRUCTURE OF INFRARED DETECTOR

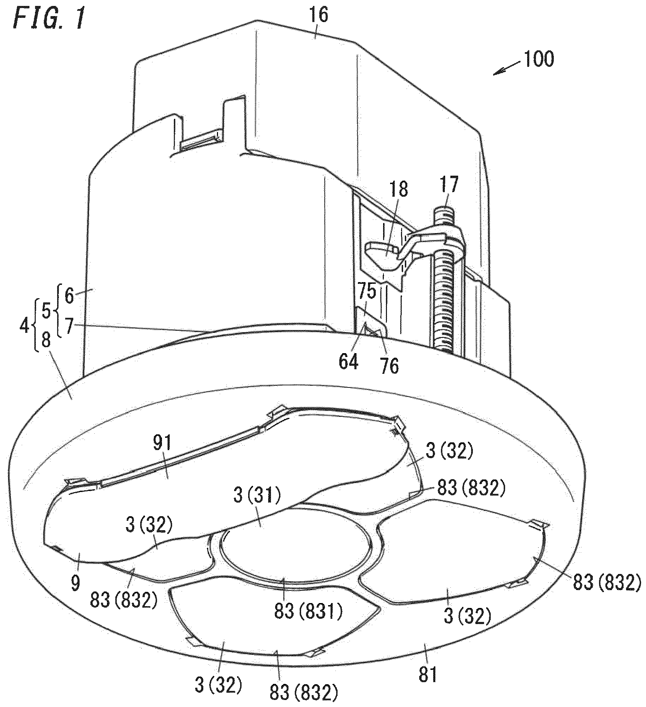

Hereinafter, an infrared detector 100 of one embodiment is described with reference to FIGS. 1 to 10 and 11A to 11C.

The infrared detector 100 of the present embodiment is used to detect a heat source (e.g., a human) in a detection area. The infrared detector 100 is an infrared human detector for performing human detection within the detection area.

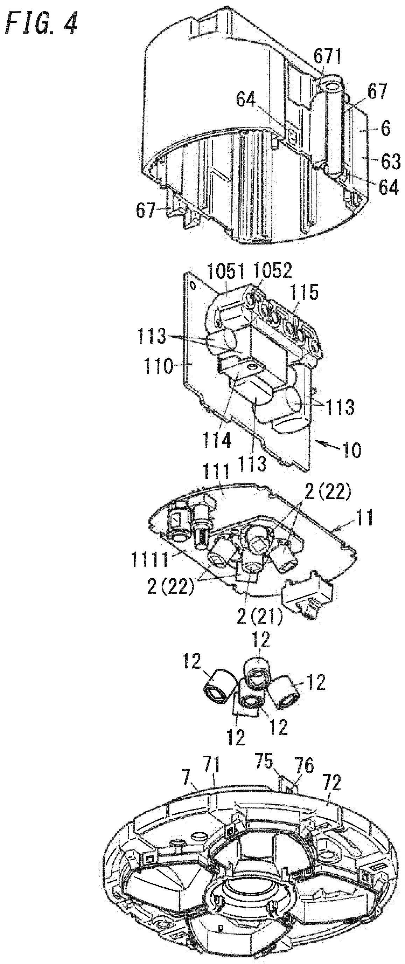

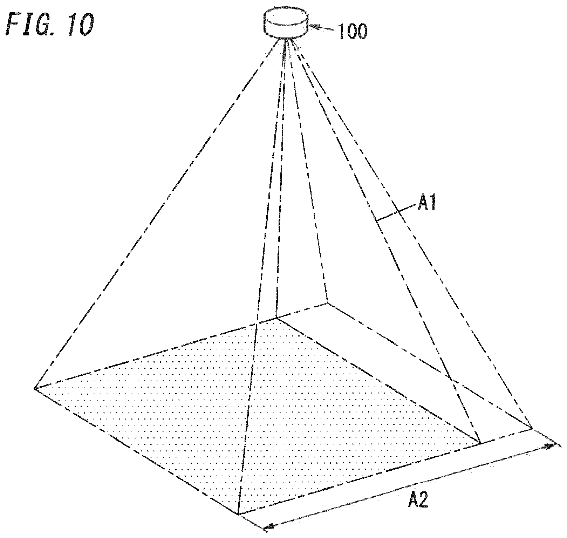

As shown in FIGS. 1 to 8, the infrared detector 100 includes a plurality of (five) infrared sensors 2 (see FIG. 4), a plurality of (five) infrared transmitting members 3, a housing 4, and a light shielding plate 9. The plurality of infrared transmitting members 3 are arranged one by one in front of the plurality of infrared sensors 2. The housing 4 accommodates the plurality of infrared sensors 2, and supports the plurality of infrared transmitting members 3. The light shielding plate 9 shields infrared light. The light shielding plate 9 is placed to cover each of two infrared transmitting members 3 of the plurality of infrared transmitting members 3 (in thickness directions of the infrared transmitting members 3). Accordingly, the detection area of the infrared detector 100 is than a detection area in a condition where the light shielding plate 9 is detached from the infrared detector 100 (hereinafter, referred to as a predetermined detection area, if necessary). In the present embodiment, the predetermined detection may be a maximum detection area. The predetermined detection area is determined by an infrared receiver unit that includes the plurality of infrared sensors 2 and the plurality of infrared transmitting members 3. In other words, the predetermined detection area is considered as a combined detection area formed by five single detection areas. Each single detection area is determined by a corresponding one of sets of the plurality of infrared sensors 2 and the plurality of infrared transmitting members 3 which are associated with each other one by one. The predetermined detection area has a four-sided pyramid shape. The detection area of the infrared detector 100 of the present embodiment has a four-sided oblique pyramid shape. FIG. 10 is an explanatory view of the detection area of the infrared detector 100, and "A2" indicates the detection area in a condition where no light shielding plate 9 is placed (the predetermined detection area), and "A1" indicates the detection area in a condition where the light shielding plate 9 is placed. Actually, the detection area is not visible.

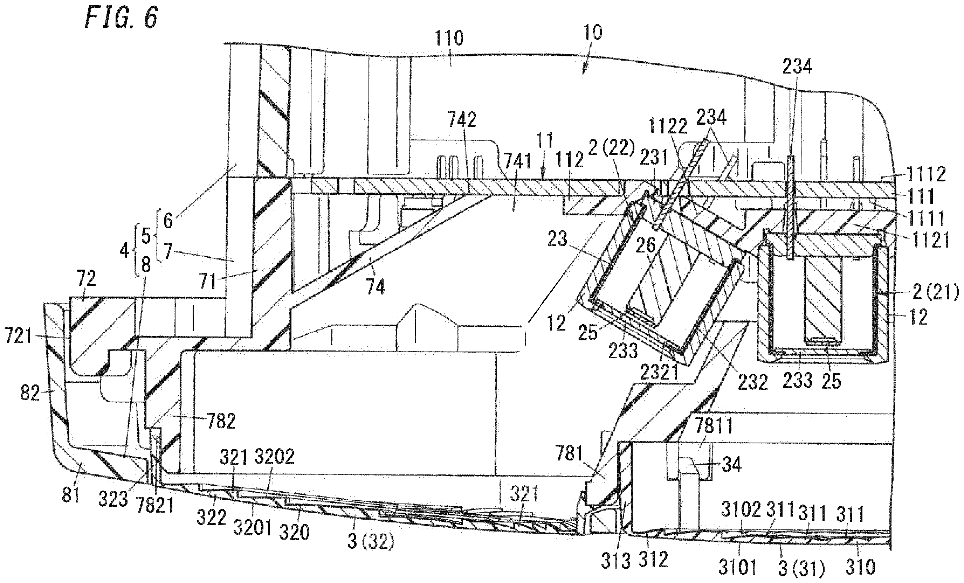

Additionally, the infrared detector 100 includes a power supply circuit module 10 (see FIGS. 4 and 6). Further, the infrared detector 100 includes a sensor module 11 (see FIGS. 4 and 6) which includes the plurality of infrared sensors 2. The power supply circuit module 10 converts an AC voltage supplied from an external power supply (e.g., a commercial power supply) into a desired DC voltage and supplies it to the sensor module 11. The power supply circuit module 10 and the sensor module 11 are accommodated in the housing 4.

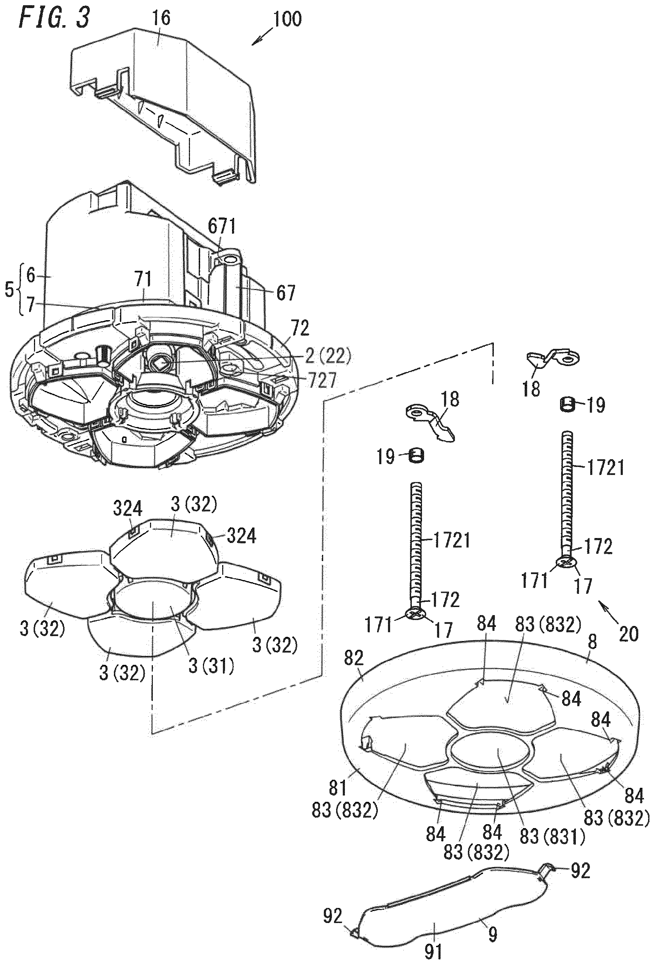

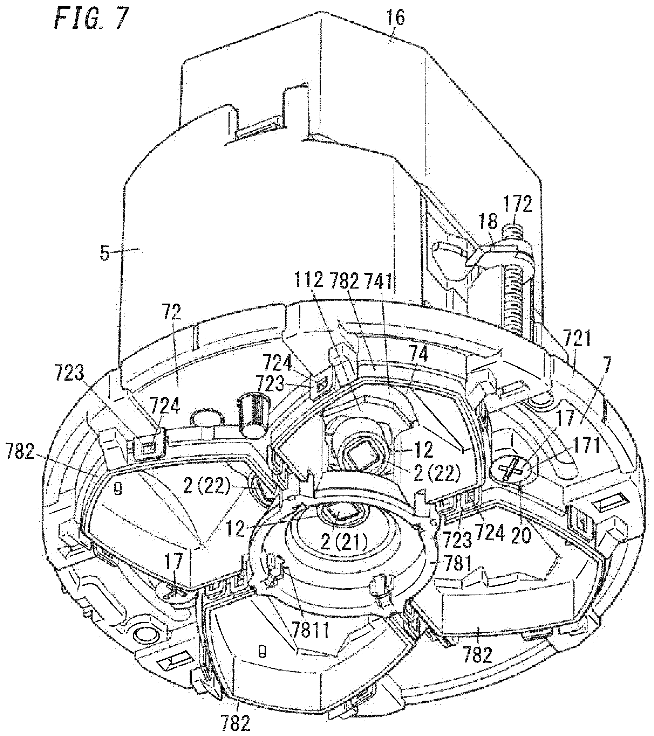

Moreover, the infrared detector 100 includes an attachment device 20 (see FIGS. 3 and 7) which is used to attach the infrared detector 100 to an exposed attachment cover, for example. The exposed attachment cover may be attached to a ceiling material, a metal round exposed box, a resin round exposed box, a metal molding, a raceway, an embedded box, or the like, for example.

### (2) INDIVIDUAL COMPONENTS OF INFRARED DETECTOR

### (2.1) INFRARED SENSOR

As shown in FIG. 6, the infrared sensor 2 includes a pyroelectric device 25, a mounting substrate 26, and a package 23.

The pyroelectric device 25 is a quad type pyroelectric device including a single pyroelectric material substrate where four detectors are arranged in two-by-two array (matrix). Each of the four detectors is a capacitor which includes a first electrode placed on a first surface of a pyroelectric material substrate, a second electrode placed on a second surface opposite from the first surface, and part of the pyroelectric material substrate interposed between the first electrode and the second electrode. The first electrode is made of an electric conductive film (e.g., NiCr films) with properties of absorbing infrared light. An optical axis of the infrared sensor 2 is defined as a normal line at a center of a square including the individual light receiving surfaces of the four detectors when the pyroelectric device 25 is viewed in a thickness direction thereof. When receiving infrared light, the pyroelectric device 25 outputs a current signal depending on a change in amount of infrared light received.

Each infrared sensor 2 further includes a signal processing unit for performing signal processing on an output signal from the pyroelectric device 25. The signal processing unit includes one or more IC devices (IC: Integrated Circuit). The signal processing unit includes a current-voltage conversion circuit, a voltage amplification circuit, a determination circuit, and an output circuit. The current-voltage conversion circuit includes a circuit for converting a current signal which is an output signal outputted from the pyroelectric device 25, into a voltage signal. The voltage amplification circuit includes a circuit for amplifying components with frequencies within a predetermined frequency range (e.g., 0.1 Hz to 10 Hz) included in the voltage signal outputted from the current-voltage conversion circuit. The voltage amplification circuit has a bandpass filter function. The bandpass filter function includes a function of allowing components of the predetermined frequency range of the voltage signal outputted from the current-voltage conversion circuit to pass, but removing undesired frequency components considered as noise. The determination circuit includes a circuit for comparing a voltage level of the voltage signal outputted from the voltage amplification circuit with one or more predetermined reference voltages (threshold values) (i.e., determines whether the voltage level of the voltage signal is larger or smaller than the reference voltages), and outputting an output signal corresponding to a result of comparison, for example. In one example, the determination circuit includes a window comparator. In this example, the window comparator may be configured to compare the voltage level of the voltage signal with two reference voltages with mutually different voltage values. This window comparator may be configured to output the output signal with an "L" level when the voltage level of the voltage signal becomes larger than a larger one of the two reference voltages (hereinafter referred to as a "first reference voltage") or when the voltage level becomes smaller than a second reference voltage lower than the first reference voltage. The window comparator may be also configured to output the output signal with an "H" level while the voltage level of the voltage signal is in a range between the first reference voltage and the second reference voltage. The output circuit includes a circuit for outputting a human body detection signal as its output signal when it is determined that the voltage level go across the border defined by the threshold.

The pyroelectric device 25 and the signal processing unit are mounted on the mounting substrate 26. The mounting substrate 26 may be a molding substrate, for example.

The package 23 is a package commonly named "Can Package". The can package may be called "Metal Package" in some cases. The package 23 includes a base 231, a cap 232, a window member 233, and a plurality of lead terminals 234 (only two of them are illustrated in FIG. 6).

The base 231 is electrically conductive. In this regard, the base 231 is made of metal. The base 231 has a disk shape, and supports, on its side in its thickness direction, the mounting substrate 26.

The cap 232 is electrically conductive. In this regard, the cap 232 is made of metal. The cap 232 has a hollow cylindrical shape with a bottom, and is fixed to the base 231 to cover the mounting substrate 26 and the pyroelectric device 25.

The window member 233 is a member with infrared light transmitting properties. The window member 233 is electrically conductive. In this regard, the window member 233 includes a silicon substrate, for example. The window member 233 includes, in addition to the silicon substrate, an infrared optical filter on this silicon substrate. The infrared optical filter includes optical multilayer film which transmits infrared light in a range of wavelengths which can be detected by the infrared detector 100.

The window member 233 is placed to block a window hole 2321 formed in a front wall of the cap 232. The window member 233 is bonded to the cap 232 with electrically conductive material, thereby electrically coupled with the cap 232. The window member 233 is positioned in front of the light receiving surface of the pyroelectric device 25.

Three lead terminals 234 are held by the base 231. The three lead terminals 234 each have a pin shape. The three lead terminals 234 each penetrate the base 231 in the thickness direction of the base 231. The three lead terminals 234 include a power supply lead terminal, a signal output lead terminal, and a ground lead terminal.

### (2.2) SENSOR MODULE

The sensor module 11 includes the plurality of infrared sensors 2, a circuit board 111, a control circuit, and a spacer 112.

The circuit board 111 is a printed circuit substrate. The circuit board 111 includes a first surface 1111 across a thickness direction thereof, and a second surface 1112 on an opposite side thereof from the first surface 1111. In the sensor module 11, the infrared sensors 2 are arranged on the first surface 1111 of the circuit board 111 so that four infrared sensors 2 (hereinafter, referred to as "second infrared sensors 22" in some cases) surrounds one infrared sensor 2 (hereinafter, referred to as a "first infrared sensor 21" in some cases). In more detail, on the first surface 1111 of the circuit board 111, the four second infrared sensors 22 are arranged on one imaginary circle at almost regular intervals and the first infrared sensor 21 is positioned at a center of the imaginary circle. In other words, in the sensor module 11, on the first surface 1111 of the circuit board 111, the four second infrared sensors 22 are positioned one-by-one at four corners of an imaginary square, and the first infrared sensor 21 is positioned at a center of the imaginary square.

The optical axis of the first infrared sensor 21 is perpendicular to the first surface 1111 of the circuit board 111. In this sentence, the word "perpendicular" is not used to mean only "crossing at a strict right angle" but is used to mean "almost perpendicular (crossing at an angle of 90° ± 5°)". The optical axes of the plurality of second infrared sensors 22 are oblique to the first surface 1111 of the circuit board 111. The optical axes of the plurality of second infrared sensors 22 cross the optical axis of the first infrared sensor 21 at the same angle. Further, the plurality of second infrared sensors 22 are mounted on the circuit board 111 so that the optical axes of the plurality of second infrared sensors 22 are inclined from the optical axis of the first infrared sensor 21 in individual different directions.

The spacer 112 is positioned between the circuit board 111 and the five infrared sensors 2 (the base 231 of the package 23 thereof). The spacer 112 includes a first spacer portion 1121 positioned between the first infrared sensor 21 and the circuit board 111, and four second spacer portions 1122 each positioned between a corresponding one of the four second infrared sensors 22 and the circuit board 111.

The first spacer portion 1121 includes a surface facing the base 231 of the first infrared sensor 21, wherein the surface is perpendicular to the optical axis of the first infrared sensor 21 and is parallel to the first surface 1111 of the circuit board 111. Each of the second spacer portions 1122 includes a surface facing the base 231 of the corresponding second infrared sensor 22, wherein the surface is perpendicular to the optical axis of the second infrared sensor 22 and is inclined relative to the first surface 1111 of the circuit board 111.

The control circuit is configured to turn on and off a switching device 114 (see FIG. 4) based on individual output signals from the plurality of infrared sensors 2. The switching device 114 is coupled between a connection terminal for power coupling and a connection terminal for load coupling, of the power supply circuit module 10 described later.

The sensor module 11 includes a plurality of sensor covers 12 attached one-by-one to the plurality of infrared sensors 2.

The sensor cover 12 surrounds a side of the cap 232 of the package 23 of the infrared sensor 2. The sensor cover 12 is made of material lower in a thermal conductivity than the cap 232. The material of the sensor cover 12 maybe an ABS resin, for example.

### (2.3) POWER SUPPLY CIRCUIT MODULE

As shown in FIG. 4, the power supply circuit module 10 includes the circuit board 110, a plurality of electronic parts 113 constituting a power supply circuit, the switching device 114, and a terminal block 115. The circuit board 110 includes a printed circuit board. The power supply circuit includes a circuit configured to convert an AC voltage supplied from an external power supply (e.g., a commercial power supply) into a predetermined DC voltage and supply it to the sensor module 11. The plurality of electronic parts 113, the switching device 114, and the terminal block 115 are mounted on the circuit board 110. The switching device 114 may include a triac, for example. The terminal block 115 includes an electrically insulating terminal block body 1051 and six connection terminals to be coupled to external electric cables. The six connection terminals each are housed in the terminal block body 1051. The terminal block body 1051 includes six electric cable insertion holes 1052 one-by-one corresponding to the six connection terminals. Each connection terminal is coupled to an electric cable inserted through a corresponding electric cable insertion hole 1052.

Two connection terminals of the six connection terminals serve as terminals for power supply coupling, other two connection terminals serve as terminals for load coupling, and remaining two connection terminals serve as terminals for slave and master coupling. Examples of the load may include lighting loads. Examples of the slave or the master may include human sensors.

### (2.4) INFRARED-TRANSMITTING MEMBER

The infrared transmitting members 3 are made of synthetic resin. Examples of material of the infrared transmitting members 3 may include polyethylene. In more detail, the material of the infrared transmitting members 3 may be polyethylene containing white colorant. The white colorant may be titanium dioxide, for example. The infrared transmitting members 3 may be made by molding. The infrared transmitting members 3 are dielectric.

In the following, if necessary, as to the five infrared transmitting members 3, one infrared transmitting member 3 corresponding to the first infrared sensor 21 may be referred to as a "first infrared transmitting member 31", and four infrared transmitting members 3 one-by-one corresponding to the four second infrared sensors 22 each may be referred to as a "second infrared transmitting member 32".

The first infrared transmitting member 31 includes a multi-lens block 310 (see FIG. 6) causing infrared light from the outside of the first infrared transmitting member 31 to converge on the first infrared sensor 21 (the pyroelectric device 25 thereof). The multi-lens block 310 includes a plurality of (thirty) lenses 311 (see FIG. 6). Further, each of the plurality of second infrared transmitting members 32 includes a multi-lens block 320 (see FIG. 6) causing infrared light from the outside of the second infrared transmitting member 32 to converge on a corresponding one of the second infrared sensors 22. Each multi-lens block 320 includes a plurality of (fifteen) lenses 321 (see FIG. 6). Hereinafter, in some cases, the multi-lens block 310 of the first infrared transmitting member 31 may be referred to as a "first multi-lens block 310", and the lenses 311 of the first multi-lens block 310 may be referred to as "first lenses 311". Further, in some cases, the multi-lens block 320 of each second infrared transmitting member 32 may be referred to as a "second multi-lens block 320", and the lenses 321 of the second multi-lens block 320 may be referred to as "second lenses 321".

As shown in FIG. 6, the first multi-lens block 310 includes an entrance surface 3101 where infrared light from the outside strikes, the entrance surface 3101 being constituted by a group of individual entrance surfaces of the plurality of first lenses 311. The first multi-lens block 310 includes an exit surface 3102 where infrared light emerges, the exit surface 3102 being constituted by a group of individual exit surfaces of the plurality of first lenses 311.

Each of the plurality of first lenses 311 of the first multi-lens block 310 functions as a converging lens and is constituted by a convex lens. In this regard, the convex lens constituting each of the plurality of first lenses 311 includes an aspherical lens.

The second multi-lens block 320 includes an entrance surface 3201 where infrared light from the outside strikes, the entrance surface 3201 being constituted by a group of individual entrance surfaces of the plurality of second lenses 321. The second multi-lens block 320 includes an exit surface 3202 where infrared light emerges, the exit surface 3202 being constituted by a group of individual exit surfaces of the plurality of second lenses 321.

Each of the plurality of second lenses 321 of the second multi-lens block 320 functions as a converging lens and is constituted by a convex lens. In this regard, the convex lens constituting each of the plurality of second lenses 321 includes a Fresnel lens.

As shown in FIGS. 1 and 6, the first infrared transmitting member 31 is in a hollow cylindrical shape with a bottom and includes a bottom wall (front wall) 312 provided with the first multi-lens block 310 described above. The first infrared transmitting member 31 includes a side wall 313 provided with four hooks 34 (see FIG. 6) for attachment of the first infrared transmitting member 31 to the housing 4.

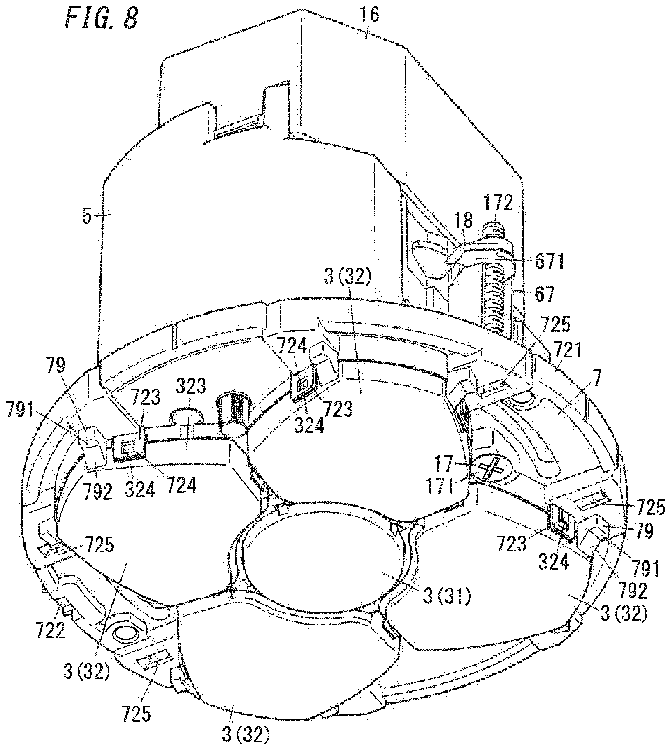

As shown in FIGS. 1 and 6, each of the second infrared transmitting members 32 is in a box shape with a bottom and includes a bottom wall (front wall) 322 provided with the second multi-lens block 320 described above. The second infrared transmitting member 32 includes a side wall 323 provided with a plurality of claws 324 (see FIG. 8) separate in a circumferential direction for attachment of the second infrared transmitting members 32 to the housing 4.

The four second infrared transmitting members 32 are arranged in rotational symmetry of order 4 about a center line of the first infrared transmitting member 31.

### (2.5) HOUSING

The housing 4 includes a housing body 5 and a decorative cover 8. The housing body 5 accommodates the power supply circuit module 10 and the sensor module 11. The decorative cover 8 includes a plurality of window holes 83 for individually exposing the plurality of infrared transmitting members 3. The decorative cover 8 is attached to the housing body 5.

The housing body 5 includes a body 6 and a cover 7. The housing body 5 is assembled by coupling the body 6 and the cover 7 together.

The body 6 may be molding of synthetic resin. Examples of material of the body 6 may include an ABS resin. The body 6 has electrically insulating properties. The body 6 has a hollow cylindrical shape with a bottom. The body 6 accommodates the power supply circuit module 10 and the sensor module 11. The body 6 includes a side wall 63 provided with a plurality of (four) coupling protrusions 64 (see FIGS. 1 and 4) for coupling with the cover 7.

There are a plurality of (six) electric cable insertion holes which are formed in an opposite end of the body 6 from the cover 7 and correspond one-by-one to the plurality of (six) electric cable insertion holes 1052 of the terminal block 115. Each electric cable insertion hole is a through hole allowing insertion of an electric cable connected to a quick connection terminal of the terminal block 115.

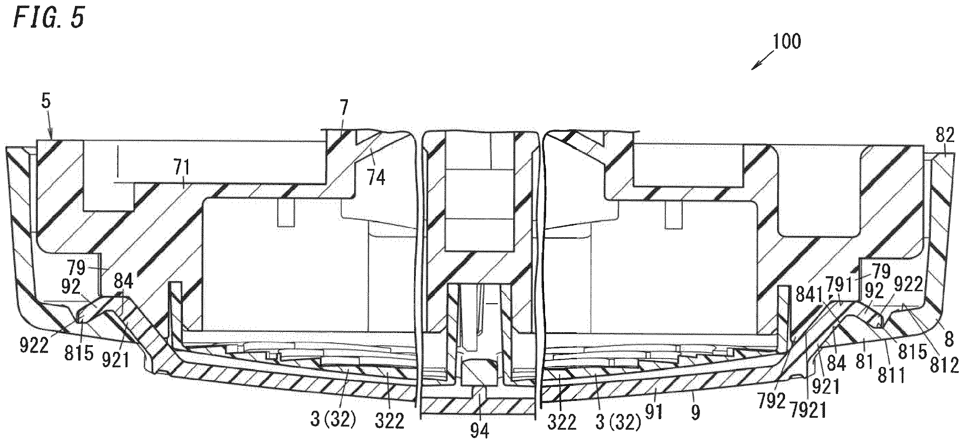

The cover 7 may be molding of synthetic resin. Examples of material of the cover 7 may include an ABS resin. The cover 7 has electrically insulating properties. The cover 7 includes a hollow cylindrical part 71, a plurality of (four) coupling protruding pieces 75, a flange part 72, a hollow cylindrical partition 74 (see FIGS. 5, 6 and 7), a first attachment part 781, a plurality of (four) second attachment parts 782.

The plurality of coupling protruding pieces 75 protrude from a first end (an end facing the body 6) in an axial direction of the hollow cylindrical part 71 in the axial direction of the hollow cylindrical part 71. The plurality of coupling protruding pieces 75 correspond one-by-one to the plurality of coupling protrusions 64 of the body 6. Each of the plurality of coupling protruding pieces 75 includes an engagement hole 76 engaged with a corresponding one of the coupling protrusions 64. In summary, the body 6 and the cover 7 are coupled together by engaging each coupling protrusion 64 of the body 6 with each engagement hole 76 of the cover 7.

The flange part 72 protrudes outward from a second end in the axial direction of the hollow cylindrical part 71. The flange part 72 is circular in its outer peripheral shape.

Additionally, the cover 7 further includes a rib 722 (see FIG. 8) protrudes outward in a diametrical direction of the flange part 72 from part of an outer periphery of the flange part 72, wherein the part is closer to a front end (lower end) than a rear end (upper end) of the flange part 72. The shape of the rib 722 looks like a U-shape where an end closer to a front wall 81 of the decorative cover 8 is open when viewed in the diametrical direction. In removing the decorative cover 8 from the housing body 5 with a tool such as a flathead screwdriver, the rib 722 can be used as a fulcrum point for supporting a top of the tool.

Inside the hollow cylindrical part 71, the partition 74 surrounds the five infrared sensors 2. The partition 74 is supported by the hollow cylindrical part 71. The shape of the partition 74 is determined not to interfere with the detection area determined by the five infrared sensors 2 and the five infrared transmitting members 3. The partition 74 is in contact with the sensor module 11 at a periphery 742 of an opening 741 closer to the sensor module 11. In this regard, as shown in FIG. 6, the periphery 742 of the opening 741 of the partition 74 is in contact with any of the first surface 1111 of the circuit board 111 of the sensor module 11, or the spacer 112.

The first attachment part 781 is a wall where the first infrared transmitting member 31 is attached. The shape of the first attachment part 781 is a circular ring extending along the side wall 313 of the first infrared transmitting member 31. In more detail, the first infrared transmitting member 31 is attached to the first attachment part 781 so that the first infrared transmitting member 31 is accommodated inside the first attachment part 781. The first attachment part 781 is provided with recesses 7811 for receiving the four hooks 34 (see FIG. 6) of the first infrared transmitting member 31. The hooks 34 of the first infrared transmitting member 31 are engaged with the recesses 7811, and thereby the first attachment part 781 holds the first infrared transmitting member 31. An inner peripheral surface of the first attachment part 781 is in contact with an outer peripheral surface of the first infrared transmitting member 31 nearly circumferentially except for regions where the recesses 7811 are formed.

Each of the four second attachment parts 782 is a wall where a corresponding one of the second infrared transmitting members 32 is attached. In more detail, the second attachment part 782 has a hollow prismatic shape almost same as the side wall 323 of the second infrared transmitting member 32. Parts of the aforementioned second attachment parts 782 also serve as parts of the first attachment part 781. The second attachment part 782 is provided with a step part 7821 which is in contact with an internal side surface and an edge of the side wall 323 of the second infrared transmitting members 32 except for part shared with the first attachment part 781. Part of the side wall 323 of the second infrared transmitting member 32 closer to the first attachment part 781 is in contact with the inner side surface of the second attachment part 782 (the outer side surface of the first attachment part 781).

Further, the cover 7 includes protruding pieces 723 corresponding to the claws 324 protruding from outer surfaces of the side walls 323 of the second infrared transmitting members 32. Each protruding piece 723 includes an engagement hole 724 engaged with a corresponding one of the claws 324.

The decorative cover 8 may be molding of synthetic resin. Examples of material of the decorative cover 8 may include an ABS resin. The decorative cover 8 has electrically insulating properties. The decorative cover 8 includes the front wall 81 having a disk shape and a side wall 82 extending rearward from the periphery of the front wall 81. The decorative cover 8 includes a front surface 811 and a rear surface 812 (see FIG. 5). The decorative cover 8 has a circular outer peripheral shape. The side wall 82 of the decorative cover 8 has an inner diameter slightly larger than an outer diameter of the flange part 72.

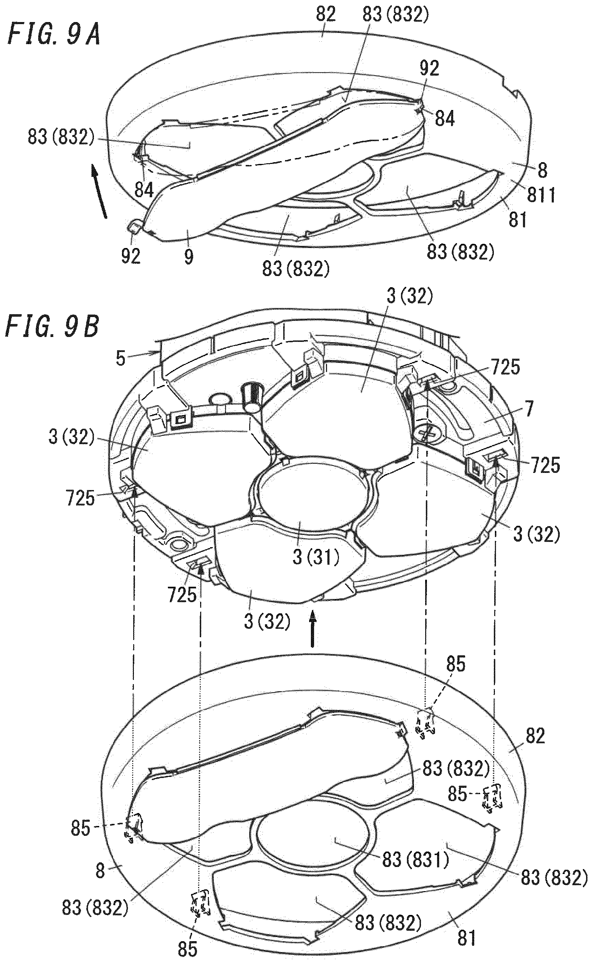

The decorative cover 8 includes a plurality of (four) latching claws 85 (see FIG. 9B) for detachably attachment to the housing body 5 (the flange part 72 thereof). The plurality of latching claws 85 are provided to the rear surface 812 of the decorative cover 8. The decorative cover 8 is attached to the flange part 72 by inserting each of the plurality of latching claws 85 into a corresponding attachment hole 725 of a plurality of attachment holes 725 (see FIG. 9B) of the flange part 72 to engage it with a periphery of the corresponding attachment hole 725.

When attached to the flange part 72, the decorative cover 8 covers the outer peripheral surface 721 of the flange part 72, heads 171 of screws 17, and the like.

The side wall 82 of the decorative cover 8 is formed with a cutout for receiving the rib 722 of the cover 7. Accordingly, in removing the decorative cover 8 from the housing body 5, a top of a tool such as a flathead screwdriver can be inserted through the cutout into a space between an inner surface of the cutout and the rib 722 of the cover 7. Then, force can be applied to the decorative cover 8 to push it from the opposite side from the front surface 811, with the rib 722 being a fulcrum point. Thus, engagement of the latching claws 85 of the decorative cover 8 with the peripheries of the attachment holes 725 of the cover 7 can be broken. Thereby the decorative cover 8 can be removed from the housing body 5.

The decorative cover 8 includes a plurality of (five) window holes 83 formed in the front wall 81. Hereinafter, in some cases, as to the five window holes 83, a window hole 83 which exposes the first infrared transmitting member 31 may be referred to as a "first window hole 831", and window holes 83 which one-by-one expose the second infrared transmitting members 32 may be referred to as "second window holes 832". The first window hole 831 is formed in a center of the front wall 81 of the decorative cover 8. The first window hole 831 has a circular opening shape. The four second window holes 832 are arranged in a circumferential direction of the first window holes 831 at regular intervals to surround the first window holes 831. The four window holes 832 have an almost hexagonal opening shape.

### (2.6) TERMINAL COVER

The terminal cover 16 is detachably attached to the body 6 to cover a plurality of electric cable insertion holes formed in the body 6. The terminal cover 16 may be molding of synthetic resin. The terminal cover 16 has electrically insulating properties.

### (2.7) ATTACHMENT DEVICE

The attachment device 20 is a device for attachment of the housing body 5 to an exposed attachment cover or the like, for example. The exposed attachment cover is formed into a hollow cylindrical shape with a bottom. The exposed attachment cover has a size capable of accommodating the infrared detector 100. The exposed attachment cover is formed integrally with a pair of shoulders which protrude inward in radial directions from an inner peripheral surface of its side wall and face each other. A distance between the pair of shoulders is smaller than the diameter of the flange part 72 in the housing 4 and is larger than a dimension of the body 6 in a shorter direction. The exposed attachment cover includes an electric cable insertion hole formed in a center of a bottom wall (top plate) thereof to allow an electric cable to pass therethrough. Further, the exposed attachment cover includes screw insertion holes which are formed in a vicinity of the electric cable insertion hole of the bottom wall thereof to allow screws for attachment of the exposed attachment cover to a wiring duct or the like to pass therethrough. The exposed attachment cover includes projections at lower surfaces of the shoulders, wherein the projections can be engaged with recesses formed in an upper surface of the flange part 72.

The attachment device 20 includes two screws 17, two clamping metal parts 18, and two bushes 19.

As shown in FIGS. 3, 7 and 8, each screw 17 includes the head 171 and a shaft 172 which has a length and includes a male thread 1721. The shafts 172 of the screws 17 are inserted into screw insertion holes 727 (see FIG. 3) of the flange part 72 and are located beside the body 6.

The bush 19 is located beneath the head 171 of the screw 17 to surround an entire circumference of the shaft 172, and between the shaft 172 (part between the head 171 and the male thread 1721 thereof) of the screw 17 and the screw insertion hole 727 of the flange part 72.

Each clamping metal part 18 includes a female thread engaged with a male thread 1721 of a shaft 172 of a screw 17, and is engaged with the male thread 1721 of the shaft 172.

The attachment device 20 includes accommodation parts 67 which protrude laterally from the side wall 63 of the body 6 to individually accommodate the shafts 172 of the screws 17. The accommodation part 67 includes a slit 671 (see FIGS. 3, 4, and 8) formed at an opposite end of the accommodation part 67 from an end facing the flange part 72. The slit 671 allows rotation of the clamping metal part 18 in a plane perpendicular to an axial direction of the shaft 172 of the screw 17.

By engaging the projections of the exposed attachment cover into the recesses of the flange part 72 and then tightening the screws 17, the shoulders can be held between the flange part 72 and the clamping metal parts 18. By doing so, the infrared detector 100 is detachably attached to the exposed attachment cover.

### (2.8) LIGHT SHIELDING PLATE

The light shielding plate 9 may be molding of synthetic resin. The light shielding plate 9 is made of material having properties of shielding or blocking infrared light. Examples of the material of the light shielding plate 9 may include polycarbonate. The light shielding plate 9 is clear and colorless.

The light shielding plate 9 is placed to overlap with two infrared transmitting members 3 (parts thereof) of the plurality of infrared transmitting members 3. In this regard, the light shielding plate 9 overlaps with the individual two infrared transmitting members 3 in thickness directions of the infrared transmitting members 3. The light shielding plate 9 is attached to the housing 4 (the decorative cover 8 thereof) to extend over the two infrared transmitting members 3 of the plurality of infrared transmitting members 3.

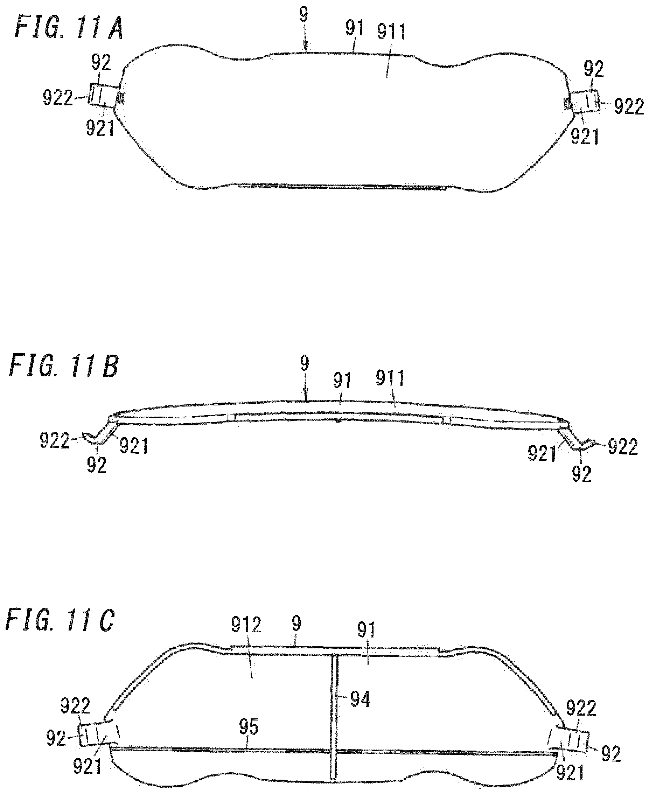

The light shielding plate 9 includes a light shielding plate body 91 and a plurality of (two) attachment claws 92 (see FIGS. 5, 11A, 11B and 11C) protruding from the light shielding plate body 91 to be engaged with the rear surface 812 of the decorative cover 8. The light shielding plate body 91 has a plate shape having a length, and includes a front surface 911 and a rear surface 912. The light shielding plate 9 includes first part in contact with the front surface 811 of the decorative cover 8 (that is, a surface of the decorative cover 8 opposite from the housing body 5) and second part in contact with the rear surface 812 of the decorative cover 8 (that is, a surface of the decorative cover 8 facing the housing body 5). The first part may include a rib protruding from the rear surface 912 of the light shielding plate body 91 (a first rib 94 described later). The second part may include the plurality of attachment claws 92.

As to structure for attachment of the light shielding plate 9 to the housing 4, as shown in FIG. 5, the two attachment claws 92 are sandwiched between the decorative cover 8 and the housing body 5.

The two attachment claws 92 each include a leg piece 921 protruding from the light shielding plate body 91 toward the housing body 5 (in a direction approaching the housing body 5), and a claw piece 922 protruding from a distal end of the leg piece 921 away from the housing body 5 (in a direction away from the housing body 5). The two attachment claws 92 protrude from opposite ends of the light shielding plate body 91 in its length axis so that one attachment claw 92 protrudes from each one end of the light shielding plate body 91.

As shown in FIG. 11C, the light shielding plate 9 includes the first rib 94 and a second rib 95 which protrude from the rear surface 912 of the light shielding plate body 91. The first rib 94 is formed on a center of the light shielding plate body 91 in its length axis and extends along a width axis of the light shielding plate body 91. The first rib 94 is to be in contact with part of the decorative cover 8 between the two second window holes 832 corresponding to the two infrared transmitting members 3 (see FIG. 5). The second rib 95 serves as a marking rib for indicating a cutting line for removing part of the light shielding plate 9 with scissors or the like by a user to change the detection area. The second rib 95 is formed to extend along the length axis of the light shielding plate body 91. As to the light shielding plate 9, part of the light shielding plate body 91 can be removed by cutting along the second rib 95. In the infrared detector 100, attaching the partially cut light shielding plate body 91 to the housing 4 can expand the detection area relative to attaching the light shielding plate body 91 to the housing 4 without cutting it.

### (2.9) STRUCTURE FOR ATTACHMENT OF LIGHT SHIELDING PLATE TO HOUSING

The housing 4 allows attachment of a plurality of light shielding plates 9 to the decorative cover 8.

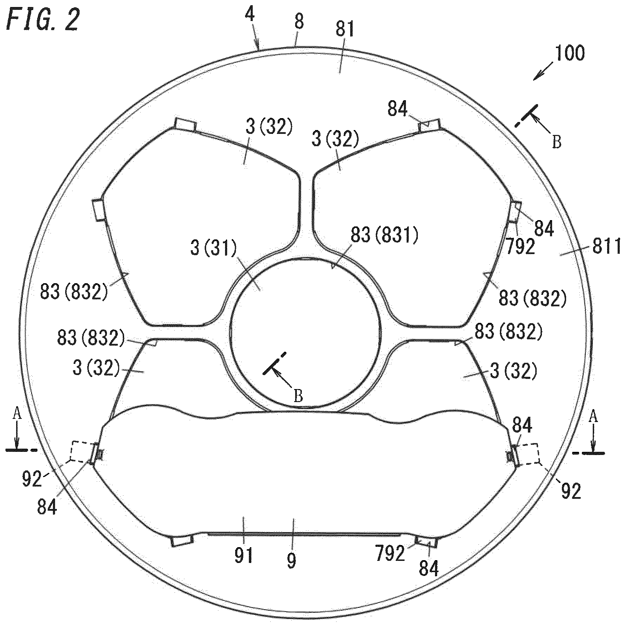

The decorative cover 8 includes a plurality of (two) cutouts 84 (see FIGS. 2, 3 and 5) which are formed in an inner periphery of each second window hole 832 and each allow any one attachment claw 92 of the two attachment claws 92 of the light shielding plate 9 to pass therethrough. In summary, the decorative cover 8 includes two cutouts 84 for each of the plurality of (four) second window holes 832. The two cutouts 84 for each second window hole 832 are away from each other in a direction along a circumferential direction of the decorative cover 8. The cutouts 84 each have a quadrangle shape when viewed from the front surface 811 of the decorative cover 8.

As shown in FIGS. 2 and 5, as to the light shielding plate 9, one attachment claw 92 is inserted into one of cutouts 84 of one second window hole 832 (said one is further from the other window hole 832 than the other) of the two second window holes 832 arranged side by side in a direction parallel to one radial direction of the decorative cover 8, and the other attachment claw 92 is inserted into one of cutouts 84 of the other second window holes 832 (said one is further from said one window hole 832 from the other). As shown in FIG. 5, an internal side surface of each cutout 84 includes an inclined surface 841 in contact with the leg piece 921 of the corresponding attachment claw 92 of the light shielding plate 9.

The decorative cover 8 includes recesses 815 (see FIG. 5) which are formed in vicinities of the cutouts 84 in the rear surface 812 thereof and are engaged with the claw pieces 922 of the attachment claws 92 of the light shielding plate 9. Accordingly, the claw pieces 922 of the two attachment claws 92 of the light shielding plate 9 are engaged with the two recesses 815 of the decorative cover 8.

In the housing 4, two cutouts 84 arranged side by side in a direction parallel to one of radial directions of the decorative cover 8 constitute one light shielding plate attachment structure. Accordingly, the housing 4 includes a plurality of light shielding plate attachment structures. The light shielding plate 9 is attached to one light shielding plate attachment structure of the plurality of light shielding plate attachment structures.

The housing 4 includes a plurality of (eight) positioning ribs 79 (FIGS. 5 and 8). The eight positioning ribs 79 protrude from a front surface, facing the decorative cover 8, of the housing body 5 (a front surface of the flange part 72) toward the front wall 81 of the decorative cover 8. The eight positioning ribs 79 are formed in the flange part 72. The eight positioning ribs 79 are arranged in a direction along a circumferential direction of the flange part 72 and spaced from each other.

Each of the eight positioning ribs 79 is at a position which allows the attachment claw 92 (FIGS. 5, 11A, 11B and 11C) of the light shielding plate 9 to be sandwiched between the positioning rib 79 and the decorative cover 8. In more detail, two of the eight positioning ribs 79 form spaces where the attachment claws 92 of the light shielding plate 9 are sandwiched between the decorative cover 8 and said two in a thickness direction of the front wall 81 of the decorative cover 8.

Each of the eight positioning ribs 79 includes a first portion 791 and a second portion 792. The first portion 791 is portion which is in planar contact with a distal end of the leg piece 921 of the attachment claw 92. The first portion 791 has a rectangular parallelepiped shape. The first portion 791 is formed at a position overlapping with a vicinity of the cutout 84 of the decorative cover 8 (in upper and lower directions). The second portion 792 is formed at a position overlapping with the cutout 84 of the decorative cover 8 (in upper and lower directions). The second portion 792 is portion which is in contact with a side facing the light shielding plate body 91, of the leg piece 921 of the attachment claw 92 which is one of the two attachment claws 92 and is held between the decorative cover 8 and the second portion 792. The second portion 792 of the positioning rib 79 includes an inclined surface 7921 which is in planar contact with a surface facing the light shielding plate body 91, of the leg pieces 921. The decorative cover 8 allows the leg piece 921 of the light shielding plate 9 to be sandwiched between the inclined surface 841 of the cutout 84 and the inclined surface 7921 of the positioning rib 79.

In attaching the light shielding plate 9 to the housing 4, first, as shown in FIG. 9A, in a condition where the decorative cover 8 is detached from the housing body 5, one attachment claw 92 of the two attachment claws 92 of the light shielding plate 9 may be inserted into one of the cutouts 84 of the decorative cover 8 and said one attachment claw 92 may be engaged with the rear surface 812 of the decorative cover 8, and subsequently the light shielding plate 9 may be flexed and the other attachment claw 92 of the light shielding plate 9 may be inserted into the other cutout 84 and the attachment claw 92 may be engaged with the decorative cover 8. Thereby, the light shielding plate 9 may be attached to the decorative cover 8. In this regard, the light shielding plate 9 is placed to extend over the two window holes 83 and part between the two window holes 83, of the decorative cover 8. Consequently, it may be prevented that the light shielding plate 9 is unintentionally detached and falls from the rear surface 812 (see FIG. 5) of the decorative cover 8.

After that, as shown in FIG. 9B, the decorative cover 8 where the light shielding plate 9 is attached is positioned opposite the housing body 5 and is moved toward the housing body 5. Thereafter, the decorative cover 8 is attached to the housing body 5. According to the infrared detector 100, the positioning ribs 79 include the second portions 792. Therefore, even when the claw pieces 922 of the attachment claws 92 fail to be engaged into the recess 815 when the light shielding plate 9 is attached to the decorative cover 8, engagement of the claw pieces 922 of the attachment claws 92 into the recess 815 can be completed more surely by attaching the decorative cover 8 to the housing body 5.

In contrast, in detaching the light shielding plate 9 from the housing 4, the decorative cover 8 may be detached from the housing body 5 and thereafter the light shielding plate 9 may be flexed and the claw pieces 922 of the attachment claws 92 may be pulled out from the recess 815 of the decorative cover 8, thereby the light shielding plate 9 being detached from the decorative cover 8.

A structure for attachment of the light shielding plate 9 includes the decorative cover 8 and the light shielding plate 9 for shielding infrared light. The decorative cover 8 is attached to the housing body 5. The housing body 5 accommodates the infrared sensors 2 and supports the infrared transmitting members 3 in front of the infrared sensors 2. The decorative cover 8 includes the window holes 83 for exposing the infrared transmitting members 3. The decorative cover 8 includes the front surface 811 and the rear surface 812. The light shielding plate 9 includes the first part (the first rib 94) in contact with the front surface 811 of the decorative cover 8, and the second part (the plurality of attachment claws 92) in contact with the rear surface 812.

### (2.10) DETECTION AREA OF INFRARED DETECTOR

In one example, the infrared detector 100 is assumed to be used to be located such that the light receiving surface of the first infrared sensor 21 is oriented vertically downward. The predetermined detection area may be a three-dimensional area with a four-sided pyramid shape. The predetermined detection area has a square shape in a horizontal plane perpendicular to its central line. A solid angle of the predetermined detection area may be determined by the plurality of infrared sensors 2 and the plurality of infrared transmitting members 3 , for example.

The predetermined detection area includes a plurality of small detection areas the number (90) of which is equal to the sum of the number (30) of first lenses 311 of the first multi-lens block 310 (see FIG. 6) and the number (4 * 15 = 60) of second lenses 321 of the four second multi-lens block 320 (see FIG. 6). Each of the plurality of (ninety) small detection areas includes a plurality of (four) tiny detection areas one-by-one corresponding to a plurality of (four) detectors of the pyroelectric device 25. Each of the plurality of tiny detection areas has a four-sided oblique pyramid shape. A solid angle of each of the plurality of tiny detection areas is smaller than solid angles of the small detection areas. In other words, the tiny detection areas are narrower than the small detection areas. The tiny detection areas may be: three-dimensional areas formed by extending rays of infrared light which strike the detectors of the pyroelectric device 25 of the first infrared sensor 21 through the first lenses 311, in opposite directions from directions in which infrared light proceeds; or three-dimensional areas formed by extending rays of infrared light which strike the detectors of the pyroelectric device 25 of the second infrared sensors 22 through the second lenses 321, in opposite directions from directions in which infrared light proceeds. In other words, the tiny detection areas may be three-dimensional areas which allow passage of rays of infrared light used for producing images on the light receiving surfaces of the detectors of the pyroelectric device 25. The tiny detection areas can be determined by user of results of simulation using software for ray tracing and analysis, for example. The predetermined detection area, each small detection area and each tiny detection area may be three dimensional areas defined optically but may not be three dimensional areas that can be visually perceived by actual persons. The small detection areas may depend on sizes and shapes of the window members 233 of the infrared sensors 2, opening shapes of the window holes 2321, and the like in some cases.

### (2.11) ADVANTAGEOUS EFFECTS

According to the light shielding plate attachment structure of the present embodiment, the light shielding plate 9 includes the first part (the first rib 94) in contact with the front surface 811 of the decorative cover 8, and the second part (the plurality of attachment claws 92) in contact with the rear surface 812. Thus, the light shielding plate attachment structure of the present embodiment can allow more precise setting of the detection area of the infrared detector 100 which includes the light shielding plate attachment structure.

Further, the infrared detector 100 of the present embodiment includes the aforementioned light shielding plate attachment structure and therefore can allow more precise setting of the detection area.

Moreover, the light shielding plate 9 of the present embodiment can be used in the aforementioned light shielding plate attachment structure and therefore can allow more precise setting of the detection area of the infrared detector 100 which includes the light shielding plate attachment structure.

Additionally, the infrared detector 100 of the present embodiment includes the plurality of infrared sensors 2 and the plurality of infrared transmitting members 3, and therefore can have the expanded detection area.

The infrared detector 100 of the present embodiment includes the light shielding plate 9 and therefore can change the extent of the detection area. Accordingly, the infrared detector 100 of the present embodiment can make the detection area narrower than the predetermined detection area. Further, in the infrared detector 100 of the present embodiment, the light shielding plate 9 is attached to the decorative cover 8 to overlap (partially overlap) with the two infrared transmitting members 3. Therefore setting of the detection area can be facilitated.

### (3) VARIATIONS

The aforementioned embodiment is one of various embodiments according to the present invention. The aforementioned embodiment can be modified in various ways according to design or the like as long as it can solve the technical problem of the present invention.

### (3.1) VARIATION 1

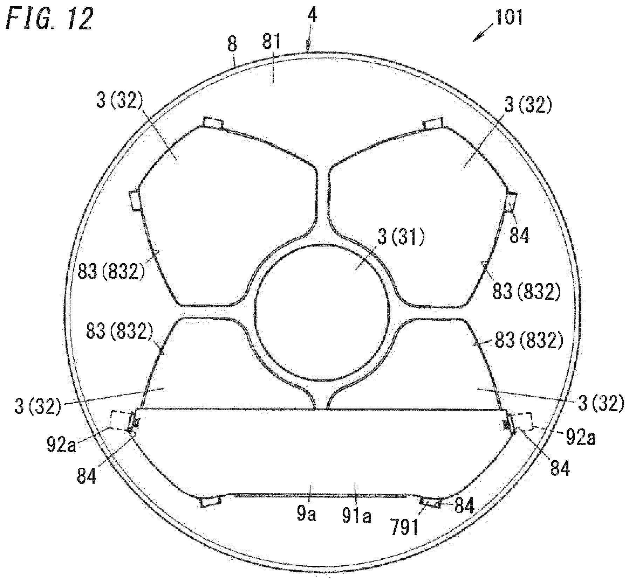

As shown in FIG. 12, an infrared detector 101 according to variation 1 of the embodiment is different from the infrared detector 100 of the aforementioned embodiment in further including, instead of the light shielding plate 9 of the infrared detector 100 of the above embodiment, a light shielding plate 9a with a different shape from the light shielding plate 9. Note that, components of the infrared detector 101 of variation 1 which are same as or comparable to those of the infrared detector 100 of the above embodiment may be designated by the same reference signs for avoidance of redundant explanations.

The light shielding plate 9a is formed by partially cutting the light shielding plate body 91 of the light shielding plate 9. Accordingly, the light shielding plate 9a includes attachment claws 92a which have the same shapes as those of the attachment claws 92 of the light shielding plate 9. The light shielding plate 9a may not be limited to being formed by partially cutting the light shielding plate 9. The light shielding plate 9a may be molding of synthetic resin formed by use of a mold different from a mold for the light shielding plate 9.

The infrared detector 101 of variation 1 can make the detection area larger than that of the infrared detector 100 of the above embodiment. A size of the light shielding plate body 91a is determined so that the number of small detection areas covered with the light shielding plate 9a is equal to about half of the number of small detection areas covered with the light shielding plate 9.

### (3.2) VARIATION 2

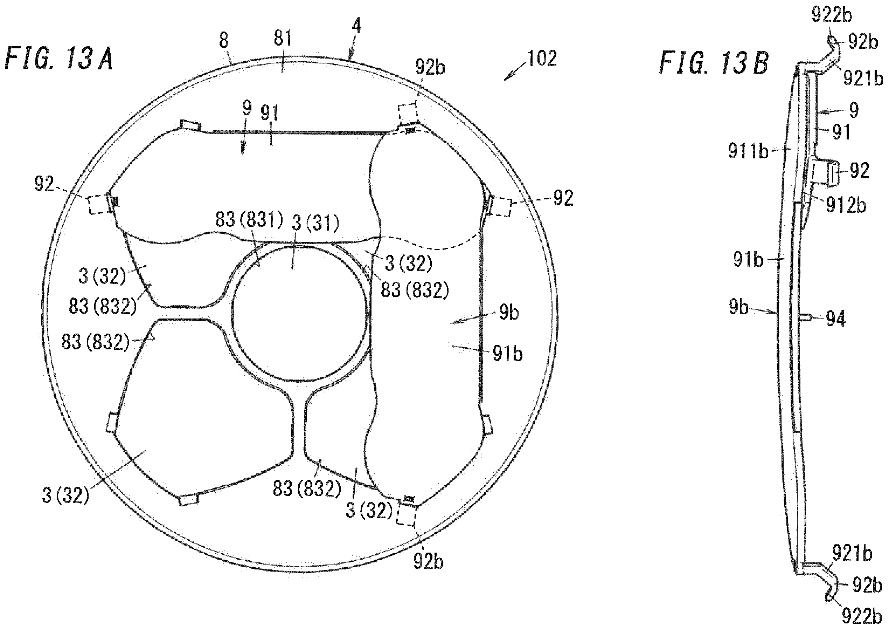

As shown in FIGS. 13A and 13B, an infrared detector 102 according to variation 2 of the embodiment is different from the infrared detector 100 of the aforementioned embodiment in further including, instead of the light shielding plate 9 of the infrared detector 100 of the above embodiment, a light shielding plate 9b with a different shape from the light shielding plate 9. Note that, components of the infrared detector 102 of variation 2 which are same as or comparable to those of the infrared detector 100 of the above embodiment may be designated by the same reference signs for avoidance of redundant explanations.

In the infrared detector 102, the light shielding plate 9 and the light shielding plate 9b are partially overlapped with each other. According to the infrared detector 102, an L-shaped area along two sides of the square predetermined detection area in a plane perpendicular to the central axis of the predetermined detection area can be set as a non detection area.

The light shielding plate 9 and the light shielding plate 9b have mutually different shapes. Hereinafter, the light shielding plate 9 may be referred to as a "first light shielding plate 9" and the light shielding plate 9b may be referred to as a "second light shielding plate 9b" in some cases.

Shapes of the front surface 911b and the rear surface 912b of the light shielding plate body 91b of the second light shielding plate 9b are same as the shapes of the front surface 911 and the rear surface 912 of the light shielding plate body 91 of the first light shielding plate 9, respectively.

The second light shielding plate 9b includes attachment claws 92b protruding from a periphery of the light shielding plate body 91b. The second light shielding plate 9b includes leg pieces 921b which are longer than the leg pieces 921 of the first light shielding plate 9. Accordingly, the light shielding plate 9b can be attached to the decorative cover 8 to overlap with the light shielding plate 9.

The infrared detector 102 of variation 2 can make the detection area narrower than that of the infrared detector 100 of the above embodiment.

### (3.3) VARIATION 3

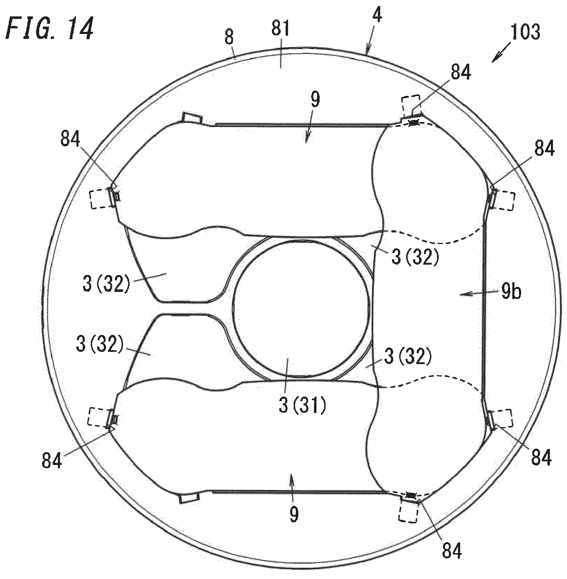

As shown in FIG. 14, an infrared detector 103 according to variation 3 of the embodiment is different from the infrared detector 102 of variation 2 in including the first light shielding plate 9 in addition to configuration of the infrared detector 102 of variation 2. Note that, components of the infrared detector 103 of variation 3 which are same as or comparable to those of the infrared detector 102 of variation 2 may be designated by the same reference signs for avoidance of redundant explanations.

The infrared detector 103 of variation 3 includes two first light shielding plates 9 and one second light shielding plate 9b. The second light shielding plate 9b includes a light shielding plate body 91b which includes a first end in its length axis overlapping with one end of one first light shielding plate 9 of the two first light shielding plates 9, and the light shielding plate body 91b includes a second end in its length axis overlapping with one end of the other first light shielding plate 9.

According to the infrared detector 103, a U-shaped area along three sides of the square predetermined detection area in a plane perpendicular to the central axis of the predetermined detection area can be set as a non detection area.

### (3.4) VARIATION 4

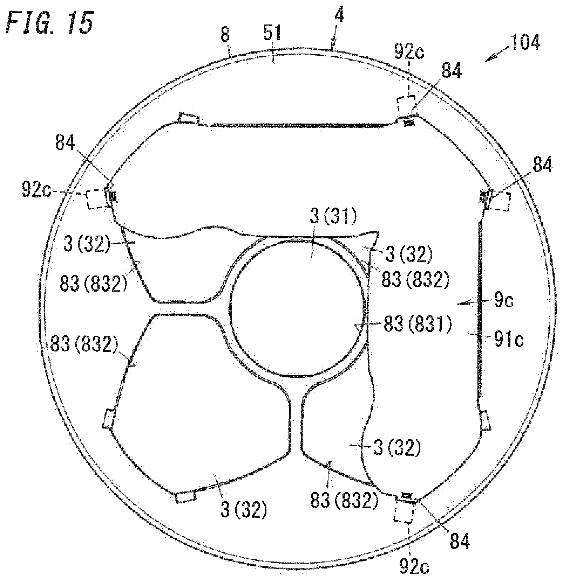

As shown in FIG. 15, an infrared detector 104 according to variation 4 of the embodiment is different from the infrared detector 100 of the aforementioned embodiment in further including, instead of the light shielding plate 9 of the infrared detector 100 of the above embodiment, a light shielding plate 9c with a different shape from the light shielding plate 9. Note that, components of the infrared detector 104 of variation 4 which are same as or comparable to those of the infrared detector 100 of the above embodiment may be designated by the same reference signs for avoidance of redundant explanations.

The light shielding plate 9c includes a light shielding plate body 91c formed into an L-shape. Therefore, the infrared detector 104 of variation 4 can allow the single light shielding plate 9c to form a detection area similar as or comparable to the detection area of the infrared detector 102 of variation 2.

### (3.5) OTHER VARIATIONS

The light shielding plates 9, 9a, 9b, and 9c may not be limited to overlapping the second infrared transmitting members 32, but may overlap with the first infrared transmitting member 31.

The pyroelectric device 25 may not be limited to a quad pyroelectric device, but may be a dual pyroelectric device, a single pyroelectric device, or the like. Further, shapes, arrangement, and the like of one or more detectors of the pyroelectric device 25 may not be limited.

The pyroelectric device 25 is a pyroelectric device which is used in a current detection mode and outputs current signals as its output signals but may not be limited to this. For example, the pyroelectric device 25 may include a pyroelectric device which is used in a voltage detection mode and outputs voltage signals as its output signals. Further, the pyroelectric device 25 may not be limited to configuration including a pyroelectric material substrate but may be a chip including one or more detectors which are formed by stacking a rear surface electrode, a pyroelectric material film, and a front surface electrode in this order on an electrically insulating film formed on a surface of a silicon substrate.

The infrared detectors 100 to 104 may include thermopiles, resistive bolometers, or the like, instead of the pyroelectric devices 25, as thermal infrared detectors in the infrared sensors 2.

The window member 233 of the package 23 of the infrared sensor 2 may include one or more semiconductor lenses such as silicon lenses.

### (SUMMARY)

It would be obvious that the following aspects can be derived from the embodiments and the like described above.

A first aspect is a light shielding plate attachment structure including: a decorative cover (8); and a light shielding plate (9; 9a; 9b; 9c) for shielding infrared light. The decorative cover (8) is to be attached to a housing body (5). The housing body (5) accommodates an infrared sensor (2) and supports an infrared transmitting member (3) in front of the infrared sensor (2). The decorative cover (8) includes a window hole (83) for exposing the infrared transmitting member (3). The light shielding plate (9; 9a; 9b; 9c) includes first part (94) in contact with a surface (the front surface 811) of the decorative cover (8) opposite from the housing body (5) and second part (92; 92a; 92b; 92c) in contact with a surface (the rear surface 812) of the decorative cover (8) facing the housing body (5).

The light shielding plate attachment structure according to the first aspect can allow more precise setting of the detection area.

A second aspect is the light shielding plate attachment structure according to the first aspect, wherein: the light shielding plate (9; 9a; 9b; 9c) includes a light shielding plate body (91; 91a; 91b; 91c), and a plurality of attachment claws (92; 92a; 92b; 92c) that protrude from the light shielding plate body (91; 91a; 91b; 91c) and engage with the surface (812) of the decorative cover (8) facing the housing body (5); the first part includes a rib (94) protruding from a rear surface (912; 912b) of the light shielding plate body (91; 91a; 91b; 91c); and the second part includes the plurality of attachment claws (92; 92a; 92b; 92c).

The light shielding plate attachment structure according to the second aspect can allow the light shielding plate (9; 9a; 9b; 9c) to be stably attached to the decorative cover (8).

A third aspect is the light shielding plate attachment structure according to the second aspect, wherein the plurality of attachment claws (92; 92a; 92b; 92c) are sandwiched between the decorative cover (8) and the housing body (5).

The light shielding plate attachment structure according to the third aspect can allow the light shielding plate (9; 9a; 9b; 9c) to be attached to the decorative cover (8) with improved accuracy of position.

A fourth aspect is the light shielding plate attachment structure according to the third aspect, wherein the housing body (5) includes a plurality of positioning ribs (79) and at least one positioning rib (79) of the plurality of positioning ribs (79) allows one attachment claw (92; 92a; 92b; 92c) of the plurality of attachment claws (92; 92a; 92b; 92c) to be sandwiched between the at least one positioning rib (79) and the decorative cover (8).

The light shielding plate attachment structure according to the fourth aspect can allow the plurality of attachment claws (92; 92a; 92b; 92c) of the light shielding plate (9; 9a; 9b; 9c) to be engaged with predetermined positions on the decorative cover (8) more accurately.

A fifth aspect is the light shielding plate attachment structure according to the fourth aspect, wherein: the plurality of attachment claws (92; 92a; 92b; 92c) each include a leg piece (921; 921a; 921b; 921c) protruding from the light shielding plate body (91; 91a; 91b; 91c) toward the housing body (5), and a claw piece (922; 922a; 922b; 922c) protruding from a distal end of the leg piece (921; 921a; 921b; 921c) away from the housing body (5); and the at least one positioning rib (79) includes portion (the second portion 792) in contact with the leg piece (921; 921a; 921b; 921c) of said one attachment claw (92; 92a; 92b; 92c) from the light shielding plate body (91; 91a; 91b; 91c).

The light shielding plate attachment structure according to the fifth aspect can allow the plurality of attachment claws (92; 92a; 92b; 92c) of the light shielding plate (9; 9a; 9b; 9c) to be engaged with predetermined positions on the decorative cover (8) more accurately.

A sixth aspect is the light shielding plate attachment structure according to the fifth aspect, wherein the portion (the second portion 792) includes an inclined surface (7921) in contact with a surface of the leg piece (921; 921a; 921b; 921c) facing the light shielding plate body (91; 91a; 91b; 91c).

The light shielding plate attachment structure according to the fifth aspect can improve accuracy of position of the light shielding plate (9; 9a; 9b; 9c).

A seventh aspect is an infrared detector (100; 101; 102; 103; 104) including the light shielding plate attachment structure according to any one of the first to sixth aspects.

The infrared detector (100; 101; 102; 103; 104) according to the seventh aspect can allow more precise setting of the detection area.

An eighth aspect is a light shielding plate (9; 9a; 9b; 9c) used in the light shielding plate attachment structure according to any one of the first to sixth aspects.

The light shielding plate (9; 9a; 9b; 9c) according to the eighth aspect can allow more precise setting of the detection area of the infrared detector (100; 101; 102; 103; 104) including a structure for attachment of the above light shielding plate.

### Reference Signs List

- 100, 101, 102, 103, 104: Infrared Detector
- 2: Infrared Sensor
- 3: Infrared Transmitting Member
- 320: Multi-lens Block
- 4: Housing
- 5: Housing Body
- 6: Body
- 7: Cover
- 79: Positioning Rib
- 792: Second Portion (Portion)
- 7921: Inclined Surface
- 8: Decorative Cover
- 811: Front Surface
- 812: Rear Surface
- 83: Window Hole
- 84: Cutout
- 9: Light Shielding Plate (First Light Shielding Plate)
- 9a: Light Shielding Plate
- 9b: Light Shielding Plate (Second Light Shielding Plate)
- 9c: Light Shielding Plate
- 91, 91a, 91b, 91c: Light Shielding Plate Body
- 912, 912b: Rear Surface
- 92, 92a, 92b, 92c: Attachment Claw (Second Part)
- 921, 921b: Leg Piece
- 922, 922b: Claw Piece
- 94: First Rib (Rib: First Part)

## Claims

1. A light shielding plate attachment structure comprising:
a decorative cover (8) that is to be attached to a housing body (5) accommodating an infrared sensor (2) and supporting an infrared transmitting member (3) in front of the infrared sensor (2), and the decorative cover (8) including a window hole (83) for exposing the infrared transmitting member (3); and
a light shielding plate (9; 9a; 9b; 9c) for shielding infrared light,
the light shielding plate (9; 9a; 9b; 9c) including first part (94) in contact with a surface (811) of the decorative cover (8) opposite from the housing body (5) and second part (92; 92a; 92b; 92c) in contact with a surface (812) of the decorative cover (8) facing the housing body (5).

2. The light shielding plate attachment structure according to claim 1, wherein:
the light shielding plate (9; 9a; 9b; 9c) includes a light shielding plate body (91; 91a; 91b; 91c), and a plurality of attachment claws (92; 92a; 92b; 92c) that protrude from the light shielding plate body (91; 91a; 91b; 91c) and engage with the surface (812) of the decorative cover (8) facing the housing body (5);
the first part includes a rib (94) protruding from a rear surface (912; 912b) of the light shielding plate body (91; 91a; 91b; 91c); and
the second part includes the plurality of attachment claws (92; 92a; 92b; 92c).

3. The light shielding plate attachment structure according to claim 2, wherein
the plurality of attachment claws (92; 92a; 92b; 92c) are sandwiched between the decorative cover (8) and the housing body (5).

4. The light shielding plate attachment structure according to claim 2 or 3, wherein
the housing body (5) includes a plurality of positioning ribs (79); and
at least one positioning rib (79) of the plurality of positioning ribs (79) allows one attachment claw (92; 92a; 92b; 92c) of the plurality of attachment claws (92; 92a; 92b; 92c) to be sandwiched between the at least one positioning rib (79) and the decorative cover (8).

5. The light shielding plate attachment structure according to claim 4, wherein:
the plurality of attachment claws (92; 92a; 92b; 92c) each include a leg piece (921; 921a; 921b; 921c) protruding from the light shielding plate body (91; 91a; 91b; 91c) toward the housing body (5), and a claw piece (922; 922a; 922b; 922c) protruding from a distal end of the leg piece (921; 921a; 921b; 921c) away from the housing body (5); and
the at least one positioning rib (79) includes portion (792) in contact with the leg piece (921; 921a; 921b; 921c) of said one attachment claw (92; 92a; 92b; 92c) from the light shielding plate body (91; 91a; 91b; 91c).

6. The light shielding plate attachment structure according to claim 5, wherein
the portion (792) includes an inclined surface (7921) in contact with a surface of the leg piece (921; 921a; 921b; 921c) facing the light shielding plate body (91; 91a; 91b; 91c).

7. An infrared detector (100; 101; 102; 103; 104) comprising the light shielding plate attachment structure according to any one of claims 1 to 6.

8. A light shielding plate (9; 9a; 9b; 9c) used in the light shielding plate attachment structure according to any one of claims 1 to 6.
